# EUROPEAN PATENT APPLICATION

(11) **EP 4 755 622 A1**
(43) Date of publication of application: **10.06.2026**
(21) Application number: 24859881.5
(22) Date of filing: 29.08.2024
(51) Int. Cl.: B32B 3/12

(54) **HOLLOW STRUCTURE**

(30) Priority: 01.09.2023 JP 2023141956
(71) Applicant: Kotobukiya Fronte Co., Ltd., Tokyo 105-0003 (JP)
(72) Inventor: YAJIMA, Hiroyuki, Gyoda-shi, Saitama 361-0021 (JP); SAITO, Norikazu, Gyoda-shi, Saitama 361-0021 (JP)
(74) Representative: Huebner, Stefan Rolf
(86) International application number: PCT/JP2024/030909
(87) International publication number: WO 2025/047852

(57) **Abstract**

Provide is a lightweight hollow structure, which has excellent strength and which can be manufactured easily.

A hollow structure 100 includes: a core layer 10 in which tubular cells 20 are arranged in a plurality of lines, and which is made of a resin-containing material; a reinforcing member 50 which is positioned inside a depressed portion 23 formed in a surface 25 of the core layer; and a retaining member 30 which is positioned in contact with both the surface 25 of the core layer and an exposed surface 51 of the reinforcing member, the exposed surface 51 being exposed from the depressed portion. The core layer 10 is welded to the reinforcing member 50 on the bottom surface of the depressed portion via a welded layer 24, and the retaining member 30 is bonded to the exposed surface 51 of the reinforcing member.

## Description

### TECHNICAL FIELD

The present invention relates to hollow structures.

### BACKGROUND ART

A conventional hollow structure including a core layer in which a plurality of cells are arranged in lines is known. Each of the cells has a polygonal tubular shape, such as a hexagonal tubular shape, or a cylindrical shape. The hollow structure is lightweight due to the structure of the core layer, and has a certain strength in the layer thickness direction. Therefore, the hollow structure is widely used for interior and exterior members of automobiles, panel materials constituting containers, boxes, etc., and construction materials, for example.

Patent Document 1 discloses a sandwich-type, structural, composite panel including a core layer as described above. This panel includes a first outer layer having a first outer surface, a second outer layer having a second outer surface, and a core positioned between these outer layers and having a large number of cavities. The outer layers and the core are bonded to each other by press molding. Crushed portions of the panel, which have a reduced thickness, form a pattern of depressions at the second outer surface of the second outer layer. Stiffening supports are bonded or joined to the second outer layer within the pattern of depressions. The stiffening supports are held in their respective depressions, without needing another support in a storage area under a luggage compartment floor panel, and are sized, shaped, and arranged within the pattern of depressions to provide the panel with strength to resist deflection from a load at various positions and orientations at the first outer surface.

### REFERENCE DOCUMENT LIST

### PATENT DOCUMENT

Patent Document 1: U.S. Patent 8808834

### SUMMARY OF THE INVENTION

### PROBLEM TO BE SOLVED BY THE INVENTION

Regarding the composite panel disclosed in Patent Document 1, the open ends of the depressed portions formed at the second outer surface are always open. Thus, when a load is applied from the first outer surface, the open ends of the depressed portions are expanded, causing a problem with the strength of the composite panel. In addition, the stiffening supports need to be fixed to the second outer layer by using adhesive or fasteners such as screws, in order to hold the stiffening supports within the depressed portions of which the open ends are always open. Thus, the composite panel has a problem in that the composite panel needs many components and manufacturing processes.

An object of the present invention is to provide a lightweight hollow structure, which has excellent strength and which can be manufactured easily.

### MEANS FOR SOLVING THE PROBLEM

In order to achieve the above-described object, a hollow structure according to the present invention includes: a core layer in which tubular cells are arranged in a plurality of lines, which is made of a resin-containing material, and which has a depressed portion on one surface of the core layer; reinforcing member which is positioned inside the depressed portion of the core layer; and a retaining member which is positioned in contact with both the one surface of the core layer and at least one part of an exposed portion of the reinforcing member, the exposed portion being exposed from the depressed portion. The core layer is welded to the reinforcing member on the bottom surface of the depressed portion, and the retaining member is bonded to the at least one part of the exposed portion of the reinforcing member.

When the reinforcing member is entirely embedded into the depressed portion, the at least one part of the exposed portion of the reinforcing member may be a surface of the reinforcing member, the surface being exposed from the depressed portion. When the reinforcing member is partially embedded into the depressed portion, the at least one part of the exposed portion of the reinforcing member may a surface of the part of the exposed portion exposed from the depressed portion. The bonding between the retaining member and the reinforcing member may be welding by a molten material of the retaining member or bonding by adhesive.

The reinforcing member may be an H-shaped member, an L-shaped member, a bar member, a triangular member, a circular member, or a semicircular member.

The one surface of the core layer and the exposed portion of the reinforcing member, the exposed portion being exposed from the depressed portion, may be on the same plane.

The core layer may be welded to the reinforcing member at a side wall portion of the depressed portion.

The retaining member may be a film.

The retaining member may be an additional core layer in which tubular cells are arranged in a plurality of lines.

The cells of the core layer may be adjacent to each other and form lines. Each of the cells of the core layer may have a closed surface at one end thereof and have an open end at the other end thereof. The lines of cells of which the open ends are arranged to face the one surface of the core layer, and the lines of cells of which the open ends area arranged to face the other surface of the core layer may be arranged every other line.

The hollow structure according to the present invention may further include an attachment member joined to the reinforcing member via the retaining member.

### EFFECTS OF THE INVENTION

As described above, according to the present invention, by welding a reinforcing member to a core layer on the bottom surface of a depressed portion of the core layer and by bonding at least one part of an exposed portion of the reinforcing member, the exposed portion being exposed from the depressed portion, to a retaining member, it is possible to provide a lightweight hollow structure, which has excellent strength and which can be manufactured easily.

### BRIEF DESCRIPTION OF THE DRAWINGS

[FIG. 1] This is a sectional view schematically illustrating an example of a hollow structure according to the present invention.
[FIG. 2] This is a perspective view schematically illustrating an example of a core layer of the hollow structure illustrated in FIG. 1.
[FIG. 3] This is a sectional view schematically illustrating another example of the hollow structure according to the present invention.
[FIG. 4] This is a sectional view schematically illustrating another example of the hollow structure according to the present invention.
[FIG. 5] This is a sectional view schematically illustrating another example of the hollow structure according to the present invention.
[FIG. 6] This is a sectional view schematically illustrating another example of the hollow structure according to the present invention.
[FIG. 7] This is a sectional view schematically illustrating another example of the hollow structure according to the present invention.
[FIG. 8] This is a sectional view schematically illustrating another example of the hollow structure according to the present invention.
[FIG. 9] This is a sectional view schematically illustrating another example of the hollow structure according to the present invention.
[FIG. 10] This is a sectional view schematically illustrating an example in which the hollow structure illustrated in FIG. 1 is provided with an attachment member.
[FIG. 11] This is a perspective view illustrating a manufacturing process of a core material used for the core layer of the hollow structure according to the present invention.
[FIG. 12] This is a plan view schematically illustrating an example of the hollow structure according to the present invention using the core layer manufactured in the manufacturing process illustrated in FIG. 11.
[FIG. 13] This is a perspective view schematically illustrating the core layer manufactured in the manufacturing process illustrated in FIG. 11.
[FIG. 14] This is a sectional view schematically illustrating the hollow structure in FIG. 12, taken along line A-A.
[FIG. 15] This is a plan view schematically illustrating another example of the hollow structure according to the present invention using the core layer manufactured in the manufacturing process illustrated in FIG. 11.
[FIG. 16] This is a sectional view schematically illustrating the hollow structure in FIG. 15, taken along line B-B.
[FIG. 17] This schematically illustrates a method of a bend test conducted on the hollow structure according to the present invention.
[FIG. 18] This schematically illustrates another method of the bend test conducted on the hollow structure according to the present invention.
[FIG. 19] This is a graph illustrating bend test measurement results obtained from examples of the hollow structure according to the present invention and a comparative example.
[FIG. 20] This is a graph illustrating bend test measurement results obtained from the examples of the hollow structure according to the present invention and the comparative example.

### MODE FOR CARRYING OUT THE INVENTION

Hereinafter, an example of a hollow structure according to the present invention will be described with reference to the accompanying drawings. The drawings are not drawn to scale, unless otherwise specified.

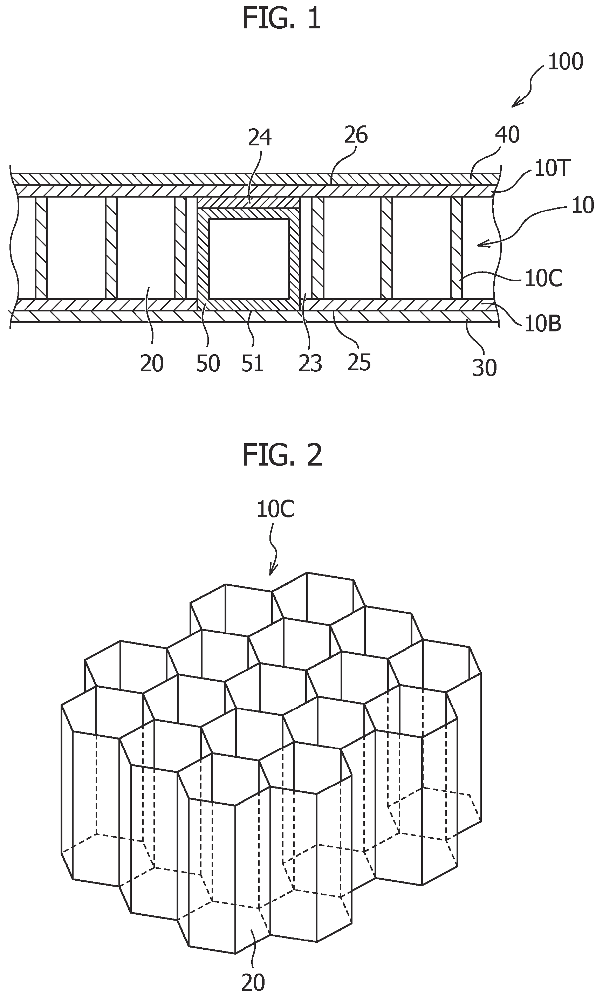

As illustrated in FIG. 1, a hollow structure according to the present example includes: a core layer 10 in which tubular cells 20 are arranged in a plurality of lines; a reinforcing member 50 positioned within a depressed portion 23 formed in one surface 25 of the core layer 10; a retaining member 30 positioned in contact with both the surface 25 of the core layer 10 and an exposed surface 51 of the reinforcing member 50, the exposed surface 51 being exposed from the depressed portion 23; and a skin layer 40, which is optional and is positioned in contact with an opposite surface 26 of the core layer. The core layer 10 may be constructed as a multilayered body including a core body 10C and two outer surface portions 10T and 10B, which are positioned to sandwich the core body 10C. The core layer 10 is welded to the reinforcing member 50 on the bottom surface of the depressed portion 23. The retaining member 30 is bonded to the surface 25 of the core layer 10 and the exposed surface 51 of the reinforcing member 50.

The core body 10C may be any core body in which a plurality of tubular cells 20 are arranged in lines. Each cell 20 has a polygonal tubular shape, such as a hexagonal tubular shape, or a cylindrical shape, for example. It is preferable that the cells 20 be arranged adjacent to one another and in lines. It is particularly preferable that the cells 20, each of which has a hexagonal tubular shape as illustrated in FIG. 2, be adjacent to one another to form the core body 10C. The core layer 10 is made of a resin-containing material. Although the resin is not limited to any particular resin, it is preferable that the resin be a thermoplastic resin, such as polypropylene (PP), polyethylene (PE), polyethylene terephthalate (PET), or polyvinyl chloride (PVC), for example. Alternatively, the material containing the resin may be, for example, a composite material of resin and fiber, or may be paper of which a surface has been coated (laminated) with resin. The core body 10C and the two outer surface portions 10T and 10B may be made of the same material or different materials.

The thickness of the core layer 10 (the total thickness of the core body 10C and the two outer surface portions 10T and 10B) is not limited to any particular value. However, it is preferable that the thickness be in a range from 3 mm to 50 mm, more preferably, in a range from 5 mm to 30 mm, from the viewpoint of the strength of the core layer 10. The weight of the core layer 10 (weight per unit area) is not limited to any particular value. However, it is preferable that the weight be in a range from 400 g/m² to 4000 g/m², more preferably, in a range from 500 g/m² to 3000 g/m². Basically, when the core layer 10 is formed to have a greater thickness and weight, the core layer 10 has greater strength.

The weight of the core layer 10 can be adjusted based on the kind of the material of the core layer 10, the thickness of the core layer 10, the wall thickness of the cells 20, and the pitch between cells 20 (the distance between the center axis of a cell and the center axis of another cell). The wall thickness of the cells 20 is not limited to any particularly value. However, it is preferable that the wall thickness be in a range from 50 µm to 1000 µm, more preferably, in a range from 100 µm to 500 µm, from the viewpoint of weight reduction. Although the pitch between cells 20 is not limited to any particular value, it is preferable that the pitch between cells 20 be in a range from 2 mm to 20 mm, more preferably, in a range from 3 mm to 15 mm, and even more preferably, in a range from 4 mm to 10 mm.

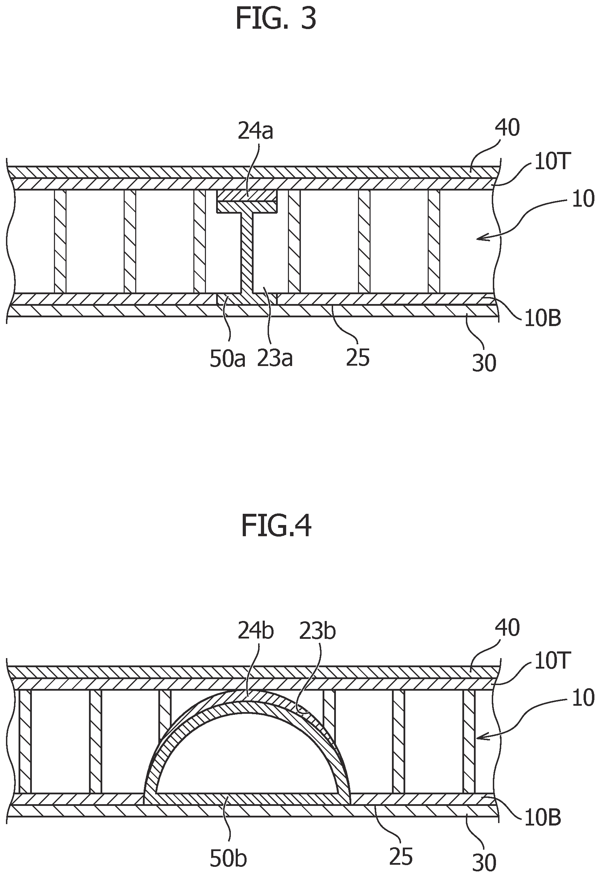

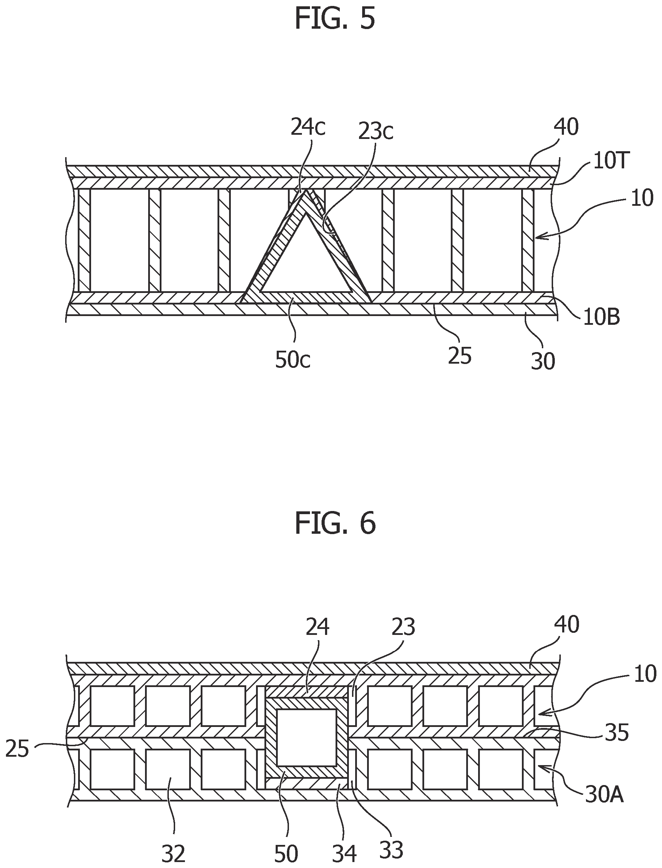

The reinforcing member 50 is not limited to any particular member. However, for example, an H-shaped member having an H-shaped cross-section, an L-shaped member having an L-shaped cross-section, a bar member having a square or rectangular cross-section, a triangular member having a triangular cross-section, or a semicircular member having a semicircular cross-section may be used as the reinforcing member 50. From the viewpoint of reduction of the weight of the hollow structure, it is preferable that an H-shaped member, an L-shaped member, or a hollow member be used. The above-described bar member, triangular member, or semicircular member may be used as a hollow member, such as a hollow square or rectangular member called a bar pipe, a hollow triangular member called a triangular pipe, or a hollow semicircular member called a semicircular pipe. FIG. 1 illustrates a bar pipe as the reinforcing member 50, FIG. 3 illustrates an H-shaped member as a reinforcing member 50a, FIG. 4 illustrates a semicircular pipe as a reinforcing member 50b, and FIG. 5 illustrates a triangular pipe as a reinforcing member 50c.

Although the material of the reinforcing member 50 is not limited to any particular material, the material may be a steel material, an aluminum material, or a stainless steel material, for example, from the viewpoint of strength and weight reduction.

The reinforcing member 50 is disposed such that the longitudinal direction thereof extends perpendicularly to a wall surface of a cell 20 of the core layer 10. The external dimensions of the reinforcing member 50 depend on the size of the cell layer 10. The external dimension of the reinforcing member 50 in the thickness direction of the cell layer 10 (hereinafter, "height") may be ... of the thickness of the cell layer 10. The external dimension of the reinforcing member 50 in a direction perpendicular to the thickness direction of the cell layer 10 (hereinafter, "width") may be the same as the height. For example, it is preferable that it be in a range from 50% to 98% of the height, more preferably, in a range from 90% to 98%. The length of the reinforcing member 50 may be substantially the same as, or may be less than, the size of the core layer 10. When the user wishes to reinforce the strength of a portion of the hollow structure, the length can be adjusted based on this portion. When the reinforcing member 50 is a hollow member, it is preferable, from the viewpoint of weight reduction, that the wall thickness of the reinforcing member 50 be, for example, in a range from 1 mm to 5 mm, more preferably, 1 mm to 2 mm, although it is not limited thereto.

Although the core layer 10 in FIG. 1 includes only one reinforcing member 50, the core layer 10 may include a plurality of reinforcing members 50. The interval at which the reinforcing members 50 are arranged depends on the external dimension of the reinforcing members 50. However, for example, it is preferable that a single reinforcing member 50 be used for each 100 mm to 200 mm area of the surface 25 of the core layer 10, and more preferably, for each 100 mm to 160 mm area of the surface 25 of the core layer 10.

The depressed portion 23 in which the reinforcing member 50 is stored is formed in the surface 25 of the core layer 10. The depth of the depressed portion 23 is substantially the same as the height of the reinforcing member 50. In addition, the core layer 10 is welded to the reinforcing member 50 via a welded layer 24 on the bottom surface of the depressed portion 23. The welded layer 24 is a molten material of the core layer 10, which is formed when the reinforcing member 50, which has been heated, is pressed against the surface 25 of the core layer 10 and is embedded into the core layer 10.

Thus, the shape of the depressed portion 23 of the core layer 10 greatly depends on the shape of a portion of the reinforcing member 50, the portion facing the surface 25 of the core layer 10. As illustrated in FIG. 1, when a bar pipe is used as the reinforcing member 50, the bottom surface of the depressed portion 23 consequently has an approximately flat shape. In this case, the flat bottom surface of the depressed portion 23 and one side of the reinforcing member 50 are welded to each other via the welded layer 24.

As illustrated in FIG. 3, in the case of the H-shaped reinforcing member 50a, when one of the two parallel sides is pressed against the surface 25 of the core layer 10, the bottom surface of the depressed portion 23a consequently has an approximately flat shape. As a result, the flat bottom surface of the depressed portion 23 and the one side of the reinforcing member 50a are welded to each other via a welded layer 24a.

As illustrated in FIG. 4, in the case of the semicircular-pipe reinforcing member 50b, when the circular portion of the reinforcing member 50b is pressed against the surface 25 of the core layer 10, an approximately semicircular groove is consequently formed as the depressed portion 23b. A cell 20 of the core layer 10, the cell being located at the center portion on this semicircular depressed portion 23b, melts to an extent that allows the reinforcing member 50b to be welded. Cells 20 located at the outer peripheral portions of the depressed portion 23b melt only partially. Thus, the arc-like bottom surface at the center portion of the depressed portion 23b and the circular tip portion of the semicircular-pipe reinforcing member 50b are welded to each other via a welded layer 24b.

As illustrated in FIG. 5, in the case of the triangular-pipe reinforcing member 50c, when one corner of the reinforcing member 50c is pressed against the surface 25 of the core layer 10, an approximately V-shaped groove is consequently formed as a depressed portion 23c. In this case, too, a cell of the core layer 10, the cell being located at the center portion of this V-shaped depressed portion 23c, melts to an extent that allows the reinforcing member 50c to be welded. Cells 20 located at the outer peripheral portions of the depressed portion 23c melt only partially. Thus, the V-shaped bottom surface at the center portion of the depressed portion 23c and the corner portion of the triangular-pipe reinforcing member 50c are welded to each other via a welded layer 24c.

As described above, even when the reinforcing member 50 has any one of the above-described shapes, the reinforcing member 50 and the bottom surface of the depressed portion 23 of the core layer 10 are welded to each other via the welded layer 24. However, since the tubular cells 20 are arranged in a plurality of lines to form the core layer 10, the cells 20 corresponding to the side wall portions of the depressed portion 23 of the core layer 10 may melt and may be welded to the reinforcing member 50, depending on the shape of the reinforcing member 50. As a result, the reinforcing member 50 is fixed to the inside of the depressed portion 23 of the core layer 10 more firmly.

For example, it is preferable that the retaining member 30 be a film or a core layer, although it is not limited thereto. In FIG. 1, the retaining member 30 is a film. It is preferable that the material of the film be, for example, a thermoplastic resin such as polypropylene (PP), polyethylene (PE), polyethylene terephthalate (PET), polyamide (PA), or polyvinyl chloride (PVC). The film may be formed by stacking a plurality of these different kinds of resin layers or by stacking a plurality of resin layers of the same kind.

When the retaining member 30 is a film, for example, it is preferable, from the viewpoint of retention strength, that the thickness of the film be in a range of 100 µm to 1000 µm, more preferably, 200 µm to 400 µm, although it is not particularly limited thereto. The film may be a breathable film having a plurality of through-holes, or may be a non-breathable film without through-holes.

When the retaining member 30 is a film, the film may be thermally welded and bonded to the exposed surface 51 of the reinforcing member 50, the exposed surface 51 being exposed from the depressed portion 23, and to the surface 25 of the core layer 10. Alternatively, the film may be bonded to these surfaces via adhesive (not illustrated). The thermal welding may be performed by the heat from the heated reinforcing member 50. Alternatively, the film serving as the retaining member 30 may be placed over the exposed surface 51 of the reinforcing member 50 and the surface 25 of the core layer 10 first, and the film serving as the retaining member 30 may be heated next.

The adhesive is not limited to any particular adhesive. For example, epoxy-based or acrylic-based adhesive may be used. The film may have a three-layer structure, which is formed by the center layer and two adhesive layers located on two sides of the center layer. In this case, a material having a melting point less than that of the material used for the center layer is used as the material of the adhesive layers. For example, polyamide having a melting point from 190°C to 220°C may be used for the center layer, and polyethylene having a melting point from 90°C to 130°C may be used for the adhesive layers. In this case, when the film is bonded to the core layer 10, the heating temperature may be set to approximately 150°C to 160°C. In this way, only the adhesive layers are melted, leaving the center layer not melted, whereby the film can be firmly bonded to the core layer 10. Other than polyamide, another example of the resin having a melting point greater than that of polyethylene used for the adhesive layers is polypropylene.

When the retaining member 30 is a film, it is preferable that the surface 25 of the core layer 10 and the exposed surface 51 of the reinforcing member 50, the exposed surface 51 being exposed from the depressed portion 23, be on the same plane after the entire reinforcing member 50 is embedded into the core layer 10. In this way, the film serving as the retaining member 30 can easily be bonded to both of the surface 25 of the core layer 10 and the exposed surface 51 of the reinforcing member 50.

FIG. 6 illustrates a case in which the retaining member 30 is a core layer (which will also be referred to as "additional core layer"). The core layer 10 and an additional core layer 30A in FIG. 6 are each a multilayered body including a core body and two outer surface portions. However, the outer surface portions are not illustrated in FIG. 6 but are integrally illustrated as their respective core bodies in FIG. 6. When a core layer as described above is used as the retaining member 30A, the entire reinforcing member 50 does not need to be embedded into the core layer 10. For example, in FIG. 6, only half of the reinforcing member 50 is embedded into the depressed portion 23 of the core layer 10 in the height direction of the reinforcing member 50. The other half of the reinforcing member 50 is embedded into a depressed portion 33 formed in a surface 35 of the core layer serving as the retaining member 30A. In addition, the surface 25 of the core layer 10 is in contact with the surface 35 of the core layer serving as the retaining member 30A. One side of the reinforcing member 50 is welded to the welded layer 24 on the bottom surface of the depressed portion 23 of the core layer 10. Similarly, another side of the reinforcing member 50, this side being opposite to the one side of the reinforcing member 50, is welded to a welded layer 34 on the bottom surface of the depressed portion 33 of the core layer serving as the retaining member 30A.

This structure can be manufactured as follows. First, the heated reinforcing member 50 is pressed against the surface 25 of the core layer 10 until half of the reinforcing member 50 is embedded into the core layer 10. Next, the core layer serving as the retaining member 30A is pressed against the reinforcing member 50 protruding from the surface 25 of the core layer 10. In this way, cells 32 of the additional core layer are melted by the heat of the reinforcing member 50, the depressed portion 33 is consequently formed in the core layer serving as the retaining member 30A, and the remaining half of the reinforcing member 50 can be embedded into the depressed portion 33. The surface 25 of the core layer 10 may be bonded to the surface 35 of the core layer serving as the retaining member 30A via adhesive or the like.

Although FIG. 6 illustrates a case in which half of the reinforcing member 50 is embedded into the core layer 10, the present invention is not limited to this case. For example, 25% to 49% of the height of the reinforcing member 50 may be embedded into the core layer 10. The remaining height of the reinforcing member 50 is embedded into the depressed portion 33 of the core layer serving as the retaining member 30A. In addition, although FIG. 6 illustrates a case in which a bar pipe is used as the reinforcing member 50, the above-described H-shaped member may be used as the reinforcing member 50. Alternatively, a circular member having a circular cross-section, in particular, a hollow circular member referred to as a circular pipe may be used.

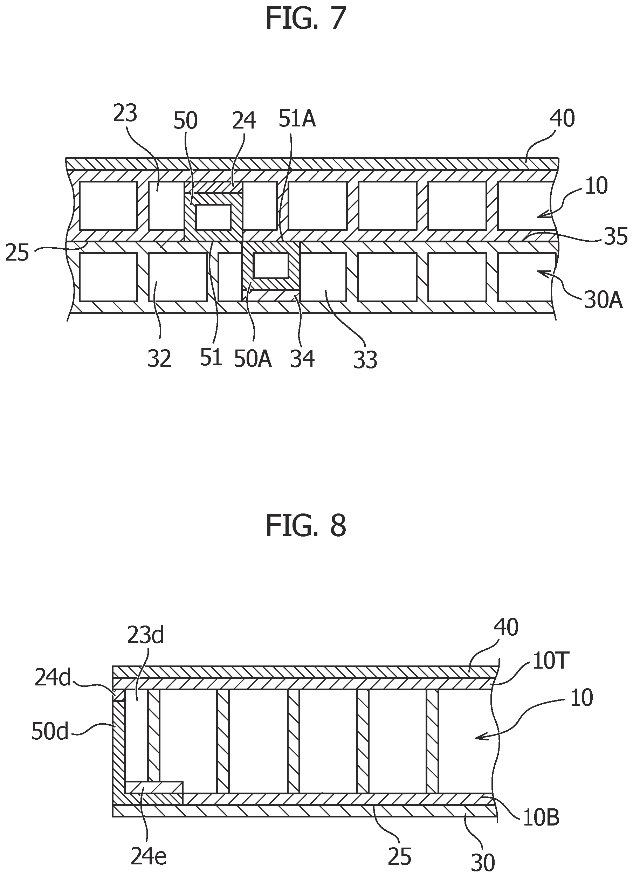

In addition, FIG. 6 illustrates a case in which a single reinforcing member 50 is held by the depressed portion 23 of the core layer 10 and the depressed portion 33 of the core layer serving as the retaining member 30A. However, alternatively, as illustrated in FIG. 7, a plurality of reinforcing members 50 may be held by the core layer 10 and the core layer serving as the retaining member 30A. In FIG. 7, a single entire reinforcing member 50 is entirely embedded into the depressed portion 23 of the core layer 10, and the exposed surface 51 of the reinforcing member 50 and the surface 25 of the core layer 10 are on the same plane. In addition, the other reinforcing member 50A (hereinafter referred to as "additional reinforcing member") is entirely embedded into the depressed portion 33 of the core layer serving as the retaining member 30A, and an exposed surface 51A of the additional reinforcing member 50A and the surface 35 of the core layer serving as the retaining member 30A are on the same plane. The exposed surface 51A and the surface 35, which are on the same plane, are in contact with each other, the exposed surface 51 of the reinforcing member 50 embedded into the depressed portion 23 of the core layer 10 is bonded to the surface 35 of the core layer serving as the retaining member 30A, and the exposed surface 51A of the additional reinforcing member 50A embedded into the depressed portion 33 of the core layer serving as the retaining member 30A is bonded to the surface 25 of the core layer 10.

The depressed portion 23 of the core layer 10 may be formed differently, as long as the depressed portion 23 is a portion that is lower than the surface 25 of the core layer 10. The whole periphery of the depressed portion 23 does not need to match the surface 25 of the core layer 10. For example, the depressed portion 23 may be formed at an end or a corner of the core layer 10. For example, as illustrated in FIG. 8, a depressed portion 23d may be formed at an end of the core layer 10. In this case, one side of a reinforcing member 50d, which is an L-shaped member, and the surface 25 of the core layer 10 are on the same plane, and this one side is bonded to the retaining member 30. The tip of another side of the reinforcing member 50d, which is an L-shaped member, is welded to adhesive layer 24d on the bottom surface of the depressed portion 23d of the core layer 10. In this way, the reinforcing member 50d can be disposed at an end or a corner of the core layer 10, at which the strength is low, and the strength of the hollow structure can be further improved.

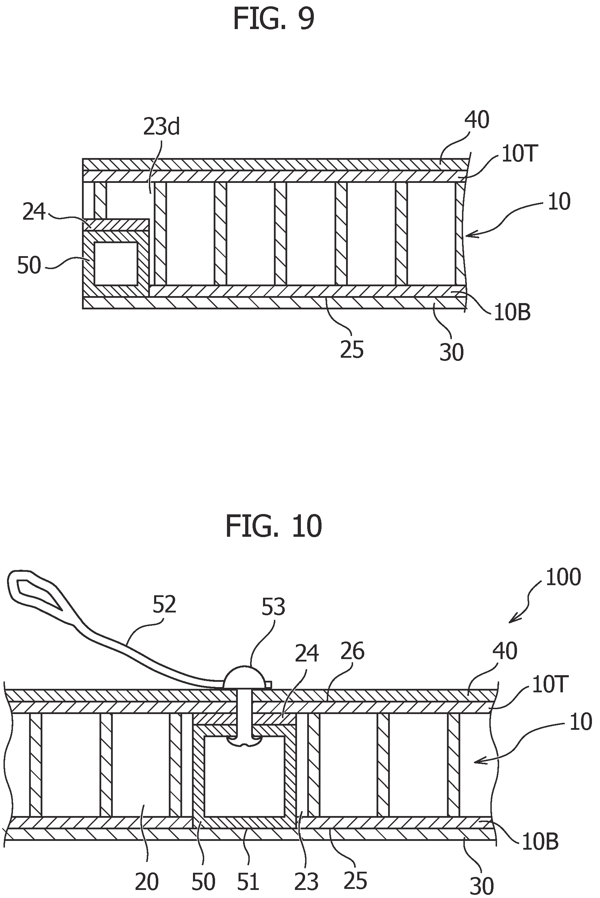

Although FIG. 8 illustrates a case in which the reinforcing member 50d, which is an L-shaped member, is used at an end of the core layer 10, the present invention is not limited to this example. As illustrated in FIG. 9, a reinforcing member 50, which is a bar pipe, can also be disposed in a depressed portion 23d at an end or a corner of the core layer 10 in the same way. In this way, the strength of the hollow structure can be improved.

In addition, an attachment member may be joined to a reinforcing member 50 via a retaining member 30. For example, the attachment member is a hook 52 as illustrated in FIG. 10. The hook 52 is an attachment member for hanging the hollow structure 100 and for moving or fixing the hollow structure 100. Because the hook 52 is joined to the reinforcing member 50, even when the hollow structure 100 is moved or fixed by the hook 52, the hook 52 is prevented from being easily detached from the hollow structure 100. It is preferable that the hook 52 be fastened to the reinforcing member 50 with a rivet 53 and that the reinforcing member 50 be joined to the retaining member 30, for example. Other examples of such an attachment member for the hollow structure include a belt and a suspension bracket.

The skin layer 40 is a layer serving as a surface when the hollow structure according to the present example is used. Although not limited to the following examples, it is preferable that various types of nonwoven fabrics such as spunbond, spunlace, and needle-punched fabric using a resin such as polyethylene terephthalate (PET), polypropylene (PP), or polyethylene (PE ) be used as the material of the skin layer 40.

As described above, the core layer 10 may be any core layer formed by arranging a plurality of generally used tubular cells in a plurality of lines. However, it is preferable that a core layer have the following structure described below.

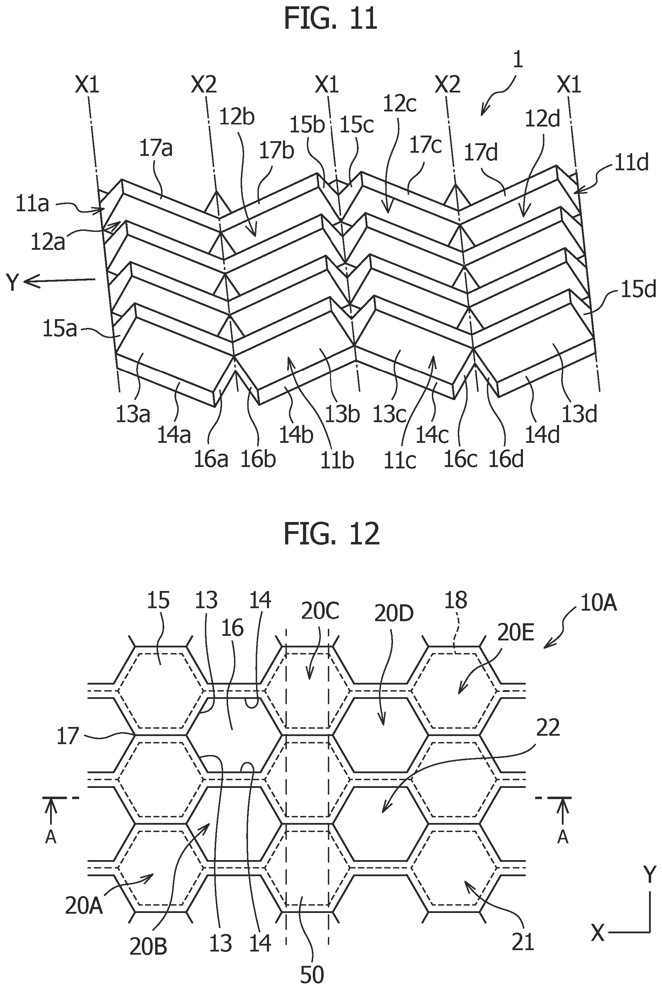

FIG. 11 is a perspective view illustrating a manufacturing process of a core material, which will be a core layer 10A. A manufacturing method of this core material is described in detail in International Publication No. WO 2006/053407, which forms one part of the present description by reference thereto herein.

As illustrated in FIG. 11, a core material 1 is obtained by thermally molding a flat material sheet with a roller (not illustrated) having a predetermined mold. The core material 1 is formed by plastic deformation of a flat material sheet, without actually cutting the sheet. The core material 1 is a resin-containing material. Although not limited to the following examples, it is preferable that the resin be thermoplastic resin such as polypropylene (PP), polyethylene (PE), or polyethylene terephthalate (PET), for example. Alternatively, the resin-containing material may be a composite material of resin and fiber, or may be paper of which a surface has been coated (laminated) with resin. The present example assumes that a thermoplastic resin is used as the core material 1. Although not limited to a particular thickness, it is preferable that the thickness of the material sheet be, for example, in a range from 0.05 mm and 0.50 mm. The core material 1 has approximately the same thickness as that of the thermally molded material sheet.

The core material 1 has a three-dimensional structure in which an individual ridge portion 11 and an individual groove portion 12 are alternately disposed in a width direction X perpendicular to a manufacturing direction Y. The individual ridge portion 11 includes two side surfaces 13 and a top surface 17 between the two side surfaces 13. The individual groove portion 12 includes two side surfaces 13 of neighboring ridge portions 11 and a bottom surface 14 between the two side surfaces 13. Although the present example assumes that the individual ridge portion 11 has a trapezoidal shape as illustrated in FIG. 11, the present invention is not limited to this example. The individual ridge portion 11 may have a polygonal shape such as a triangular shape or a rectangular shape, or may have a curved shape such as a sinusoidal curve or an arch shape.

The core material 1 has the above-described three-dimensional structure continuously in the manufacturing direction Y. That is, as illustrated in FIG. 11, a plurality of ridge portions 11a, 11b, 11c, and 11d are continuously formed in the manufacturing direction Y. The groove portions 12 are formed continuously in the same way. The connection between ridge portions 11 and the connection between groove portions 12 are made by alternately repeating two kinds of connection methods.

In the first connection method, as illustrated in FIG. 11, top surfaces 17b and 17c of two neighboring ridge portions 11b and 11c are connected to each other via their respective trapezoidal ridge portion connection surfaces 15b and 15c at a first fold line X1 extending in the width direction. The individual ridge portion connection surface 15 is formed at a right angle with respect to its corresponding top surface 17. At this first fold line X1 extending in the width direction, bottom surfaces 14b and 14c of the two neighboring groove portions are directly connected to each other. In the second connection method, as illustrated in FIG. 11, bottom surface14a and 14b (or 14c and 14d) of two neighboring groove portions are connected to each other via their respective trapezoidal groove portion connection surfaces 16a and 16b (or 16c and 16d) at a second fold line X2 extending in the width direction. The individual groove portion connection surface 16 is formed at a right angle with respect to its corresponding bottom surface 14. At this second fold line X2 extending in the width direction, top surfaces 12a and 12b (or 12c and 12d) of the two neighboring ridge portions are directly connected to each other.

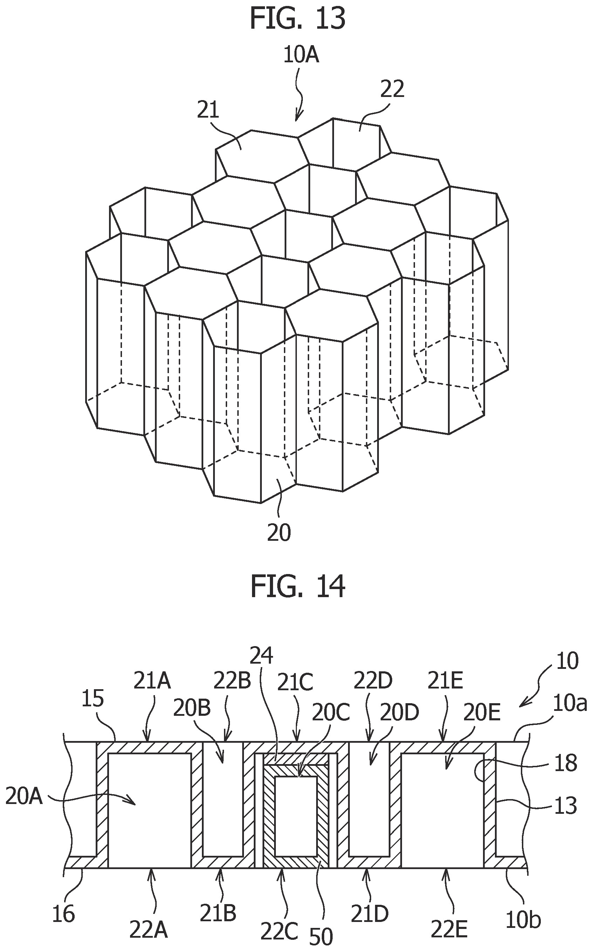

As described above, regarding the core material 1, a plurality of three-dimensional structures (the ridge portions 11 and the groove portions 12) connected to each other via their respective connection regions (the ridge portion connection surfaces 15 and the groove portion connection surfaces 16). By folding these connection regions, the damping core layer according to the present invention is formed. Specifically, a mountain fold is formed at a first fold line X1 such that the bottom surfaces 14b and 14c of two neighboring groove portions overlap each other via the back surfaces of the bottom surfaces 14b and 14c, and this folding is formed until the angle formed by the ridge portion connection surfaces 15b and 15c of the two neighboring ridge portions reaches 180 degrees. In addition, a valley fold is formed at a second fold line X2 such that top surfaces 17a and 17b (or 17c and 17d) of two neighboring ridge portions overlap each other, and this folding is formed until the angle formed by the groove portion connection surfaces 16a and 16b (or 16c and 16d) of the two neighboring groove portions reaches 180 degrees. FIGS. 12 and 13 illustrate the core layer 10A obtained by folding the core material 1 as described above.

As illustrated in FIG. 12, the core layer 10A includes approximately hexagonal tubular cells 20 disposed in a plurality of lines. Cells 20A, 20C, and 20E have each been formed by two neighboring ridge portions, and cells 20B and 20D have each been formed by two neighboring groove portions. In FIG. 12, one of the lines of cells 20A, 20C, and 20E and one of the lines of cells 20B and 20D are disposed alternately. Dashed lines 18 in FIG. 12 indicate surfaces corresponding to the back surface of the core material, and roughly indicate the inner walls of the approximately hexagonal tubular cells 20.

Each of the cells 20A, 20C, and 20E formed by the ridge portions includes six cell side surfaces forming an approximately hexagonal tubular shape, and these cell side surfaces are formed by two top surfaces 17 and four side surfaces 13 of the cell material. In addition, these cells 20A, 20C, and 20E each have a cell end portion at one surface 10a of the core layer 10A (the front surface in FIG. 12). These cell end portions have approximately hexagonal tubular closed surfaces 21A, 21C, and 21E closing their respective cell end portions. Each of these closed surfaces 21 on one side is formed by two trapezoidal ridge portion connection surfaces 15 of the cell material. In addition, these cells 20A, 20C, and 20E each have a cell end portion at the other surface 10b of the core layer 10A, which is opposite to the surface 10a. These cell end portions have open ends 22A, 22C, and 22E, which are approximately hexagonal openings. The inner space of the cells 20A, 20C, and 20E communicates with the outside via their respective open ends 22A, 22C, and 22E.

Each of the cells 20B and 20D formed by the groove portions also includes six cell side surfaces forming an approximately hexagonal tubular shape, and these cell side surfaces are formed by two bottom surfaces 14 and four side surfaces 13 of the cell material. In addition, these cells 20B and 20D each have a cell end portion at the one surface 10a of the core layer 10A. These cell end portions have open ends 22B and 22D, which are approximately hexagonal openings. The inner space of the cells 20B and 20D communicates with the outside via their respective open ends 22B and 22 D. In addition, these cells 20B and 20D each have a cell end portion at the other surface 10b of the core layer 10A, which is opposite to the one surface 10a. These cell end portions have approximately hexagonal tubular closed surfaces 21B and 21D closing their respective cell end portions. Each of these closed surfaces 21 on the other side are formed by two groove portion connection surfaces 16 of the cell material.

As described above, in the case of the core layer 10A, the cell end portions at the one surface 10a have the one-side closed surfaces 21A, 21C, and 21E formed by the ridge portions of the cell material every other line, and the cell end portions at the other surface 10b have the other-side closed surfaces 21B and 21D formed by the groove portions of the cell material in the lines of cells different from the above-described lines. Unless otherwise stated, all the closed surfaces 21, whether the one-side closed surfaces or the other-side closed surfaces, have substantially the same function.

That is, as illustrated in FIG. 13, each cell 20 of the core layer 10A has a closed surface 21 at one end thereof, and has an open end 22 at the other end thereof. The lines of cells 20 of which the open ends 22 are arranged to face the one surface of the core layer, and the lines of cells 20 of which the open ends 22 are arranged to face the other surface of the core layer are disposed every other line. By using the core layer 10A as described above, the reinforcing member 50 can be stored in a depressed portion in the same way as described above, and the reinforcing member 50 can be welded by a partially melted adhesive layer. Hereinafter, preferred arrangement of the reinforcing member 50 of the core layer 10A will be described.

As illustrated in FIGS. 12 and 14, it is preferable that the reinforcing member 50 be disposed in the core layer 10A such that the longitudinal direction of the reinforcing member 50 matches the direction (Y direction in FIG. 12) in which the closed surfaces 21 or the open ends 22 of the cells 20 are adjacent to each other in a line on the one surface of the core layer 10A. In this way, the high rigidity side of the core layer 10A can be reinforced, and the side on which bridging is achieved by the reinforcing member 50 can be further strengthened. In addition, as illustrated in FIGS. 12 and 14, it is preferable that the reinforcing member 50 be disposed inside a line of cells of the core layer 10A. Thus, by achieving a greater installation surface in a vertical section of the core layer 10A, improvement in rigidity can be expected. In this case, it is preferable that the reinforcing member 50 be pressed against the open ends 22 of cells 20 on the surface 25 of the core layer 10A. In this way, because the area of the contact surface between the reinforcing member 50 and the bottom surface of the core layer 10A can be increased, the reinforcing member 50 can be fixed more firmly.

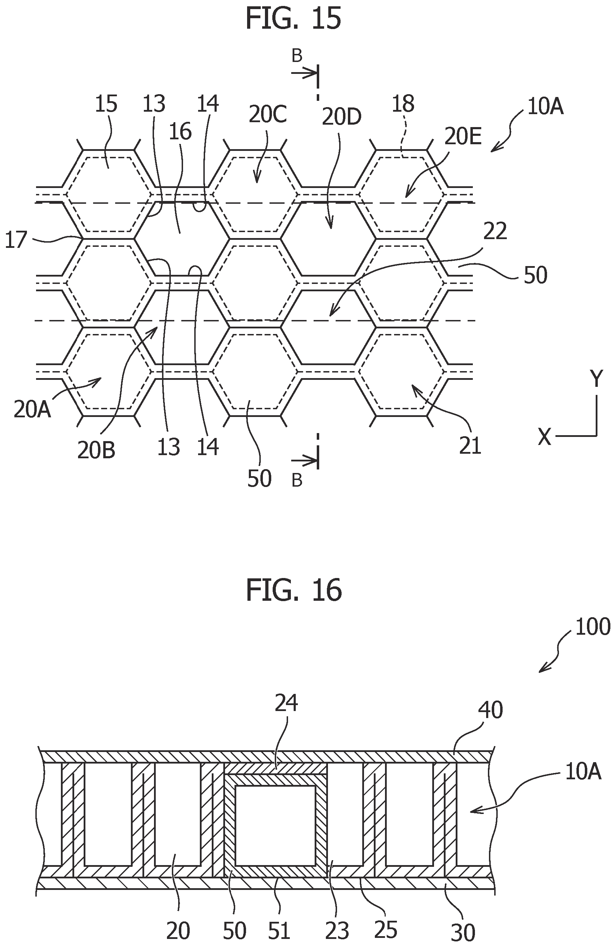

In addition, as illustrated in FIGS. 15 and 16, the reinforcing member 50 may be disposed in the core layer 10A such that the longitudinal direction of the reinforcing member 50 matches the direction (X direction in FIG. 15) perpendicular to the direction in which the closed surfaces 21 or the open ends 22 of the cells 20 are adjacent to each other in a line on the one surface of the core layer 10A. In addition, as illustrated in FIGS. 15 and 16, it is preferable that the reinforcing member 50 be disposed to come into contact with wall surfaces of cells 20 of the core layer 10A. In this way, because the contact surface between the reinforcing member 50 and the core layer 10A can be increased, improvement in rigidity can be expected.

### Examples

Hereinafter, examples according to the present invention and a comparative example will be described.

As Example 1, the hollow structure illustrated in FIG. 1 was manufactured. First, a core layer having the structure illustrated in FIG. 13 (material: polypropylene (PP) resin, core layer thickness: 20 mm, inter-cell pitch Pcy: 9.6 mm) was prepared. In addition, a bar pipe (material: stainless steel, external dimensions: 19 mm × 19 mm, thickness: 1.0 mm) was prepared as a reinforcing member, and a film (material: polypropylene (PP) film, thickness: 350 µm) was prepared as a retaining member.

After the bar pipe was heated to approximately 300°C, the bar pipe was pressed against one of the surfaces of the core layer. The contact portion between the bar pipe and the core layer was melted, and a depressed portion was consequently formed in the core layer. The pressing was performed until the entire bar pipe was embedded in the depressed portion of the core layer. That is, the pressing was performed such that the one surface of the core layer and the exposed surface of the bar pipe were on the same plane. In addition, the bottom surface of the depressed portion and the bar pipe were welded to each other by the resin melted in the depressed portion of the core layer. The bar pipe was pressed against the core layer such that the longitudinal direction of the bar pipe matches the direction (Y direction in FIG. 12) in which the open ends or the closed surfaces of cells are adjacent to each other in a line on the one surface of the core layer. Next, the film was disposed to cover the one surface of the core layer and the exposed surface of the bar pipe, these surfaces being on the same plane. Next, the film was heated to approximately 170°C, and was welded to the one surface of the core layer and the exposed surface of the bar pipe. A bend test was conducted on the hollow structure (example 1) manufactured as described above, and the strength was evaluated.

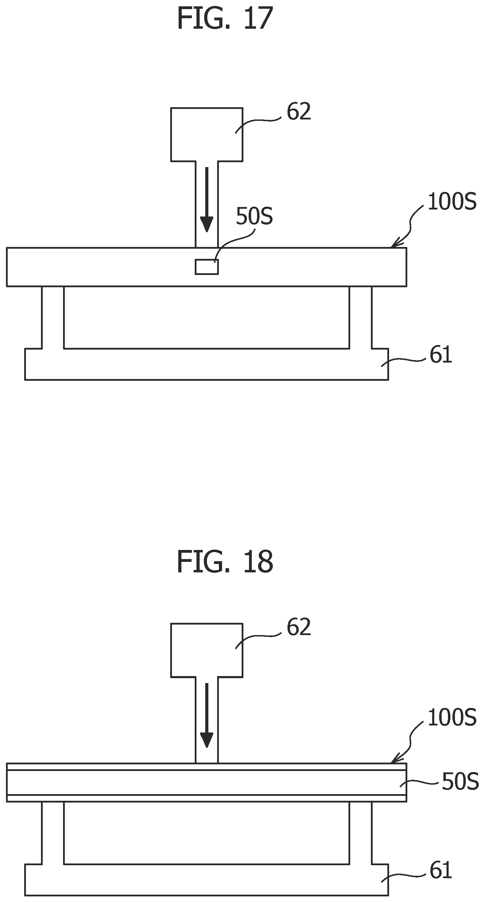

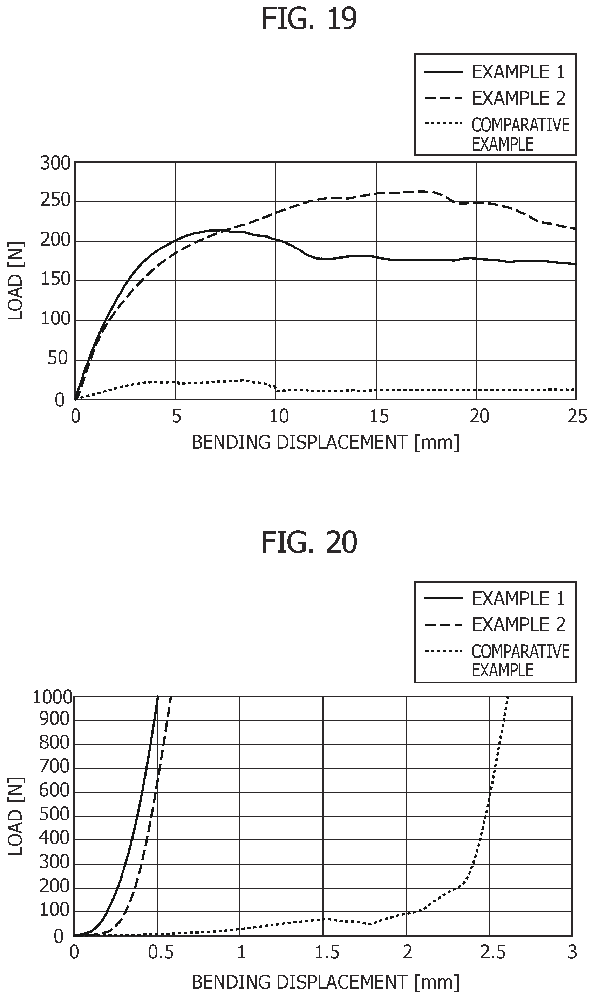

The bend test was conducted based on three-point bending in accordance with JIS K7171. For the bend test, a universal testing machine (manufactured by Instron Japan Company Limited, Model: 5965) was used. A test piece having a width of 50 mm and a length of 150 mm was used. As illustrated in FIGS. 17 and 18, a test piece 100S was supported by two supporting points of a support base 61, and a load was applied to the center of the test piece 100S by an indenter 62. As illustrated in FIG. 17, the test piece 100S was disposed on the testing machine such that a bar pipe 50S of the test piece 100S was positioned at the center between the two supporting points of the support base 61, and measurement was conducted. Next, as illustrated in FIG. 18, a test piece 100S was disposed on the testing machine such that the bar pipe 50S of the test piece 100S extends over the two supporting points of the support base 61, and measurement was conducted. In the former case, the test piece was manufactured such that the bar pipe extends in the width direction of the test piece. In the latter case, the test piece was manufactured such that the bar pipe extends in the longitudinal direction of the test piece. FIG. 19 illustrates the test results of the former case, and FIG. 20 illustrates the test results of the latter case. As test conditions, the test speed was set to 50 mm/min, the test measurement interval was set to 0.1 s, the distance between the supporting points was set to 100 mm, and the displacement at the end of the test was set to 40 mm.

In addition, as Example 2, the hollow structure as illustrated in FIG. 6 was manufactured. The hollow structure was manufactured in the same way as in Example 1, except that the thickness of the core layer was 10 mm, half of the bar pipe was embedded into the depressed portion of the core layer, and a core layer (hereinafter, "additional core layer") having a thickness of 10 mm, which is the same thickness of the core layer, was used as a retaining member (the total thickness of the core layer and the additional core layer was 20 mm). In addition, as is the case with the core layer, the heat of the bar pipe formed a depressed portion while melting the additional core layer. As a result, half of the bar pipe was embedded into the depressed portion of the additional core layer, and the bar pipe was welded to the depressed portion. The bar pipe was pressed against the additional core layer such that the longitudinal direction of the bar pipe matches the direction (Y direction in FIG. 12) in which the open ends or the closed surfaces of cells are adjacent to each other in a line on the one surface of the additional core layer. As in Example 1, a bend test was conducted on the hollow structure (example 2) manufactured as described above. FIGS. 19 and 20 illustrates the measurement results.

In addition, for comparison, a hollow structure (comparative example) was manufactured in the same way as Example 1, except that a film as a retaining member was not used. A bend test was also conducted on this comparative example, in the same way as Example 1. FIGS. 19 and 20 illustrate the measurement results.

As illustrated in FIG. 19, even when the hollow structure according to Example 1 using a film as a retaining member and the hollow structure according to example 2 using an additional core layer as a retaining member received a load of approximately 200 N and underwent a bending displacement of 25 mm from the indenter, the bar pipe in the core layer was maintained. In contrast, when the hollow structure according to the comparative example without a retaining member received a load of approximately 20N, the bar pipe welded to the inside of the depressed portion of the core layer was detached.

In addition, as illustrated in FIG. 20, in the case in which the test piece 100S was disposed on the testing machine such that the bar pipe 50S of the test piece 100S extends over the two supporting points of the support base 61, because of the rigidity of the bar pipe, none of the hollow structures according to Example 1, Example 2, and the comparative example were greatly deflected. The hollow structures successfully received a load of 1000 N or greater. The bending displacement according to Example 1 and Example 2 was approximately 0.5 mm, and the bending displacement according to the comparative example was approximately 2.5 mm. The slight difference in bending displacement was presumably due to the fact that the reinforcing member and the bottom surface were not on the same plane.

Although embodiments and examples of the present invention have thus been described, the present invention is not limited thereto. Various kinds of modifications and variations are possible as claimed in the claims.

A hollow structure manufacturing method according to the present invention may be described as the following [1] to [8].
[1] A hollow structure manufacturing method comprising:
   a step of heating a reinforcing member;
   a step of pressing the heated reinforcing member against one surface of a core layer in which tubular cells are arranged in a plurality of lines, so as to form a depressed portion in the surface of the core layer, embedding at least one part of the reinforcing member into the depressed portion, and welding the core layer and the reinforcing member on the bottom surface of the depressed portion; and
   a step of disposing a retaining member such that the retaining member comes into contact with both the one surface of the core layer and at least one part of an exposed portion of the reinforcing member, the exposed portion being exposed from the depressed portion, and bonding the retaining member to the at least one part of the exposed portion of the reinforcing member.
[2] The hollow structure manufacturing method according to [1], wherein the reinforcing member is an H-shaped member, an L-shaped member, a hollow bar member, a hollow triangular member, a hollow circular member, or a hollow semicircular member.
[3] The hollow structure manufacturing method according to [1], wherein the one surface of the core layer and the exposed portion of the reinforcing member, the exposed portion being exposed from the depressed portion, are on the same plane.
[4] The hollow structure manufacturing method according to [1], wherein the core layer and the reinforcing member are welded to each other at a side wall portion of the depressed portion of the core layer.
[5] The hollow structure manufacturing method according to [1], wherein the retaining member is a film.
[6] The hollow structure manufacturing method according to [1], wherein the retaining member is an additional core layer in which tubular cells are arranged in a plurality of lines.
[7] The hollow structure manufacturing method according to [1], wherein the cells of the core layer are adjacent to each other and form lines, wherein each of the cells of the core layer has a closed surface at one end thereof and has an open end at the other end thereof, and wherein the lines of cells of which the open ends are arranged to face the one surface of the core layer and the lines of cells of which the open ends area arranged to face the other surface of the core layer are arranged every other line.
[8] The hollow structure manufacturing method according to [1], further comprising a step of joining a suspension member to the reinforcing member via the retaining member.

### REFERENCE SYMBOL LIST

- 1: Core material
- 10: Core layer
- 10C: Core body
- 11: Ridge portion
- 12: Groove portion
- 13: Side surface portion
- 14: Bottom surface portion
- 15: Ridge portion connection surface
- 16: Groove portion connection surface
- 17: Top surface
- 18: Back surface of core material
- 20: Cell
- 21: Closed surface
- 22: Open end
- 23: Depressed portion
- 24: Welded layer
- 25: Surface of core layer
- 26: Opposite surface of core layer
- 30: Retaining member
- 33: Depressed portion
- 34: Welded layer
- 40: Skin layer
- 50: Reinforcing member
- 51: Exposed surface
- 52: Hook (attachment member)
- 53: Rivet
- 61: Support base
- 62: Indenter
- 100: Hollow structure

## Claims

1. A hollow structure comprising:
a core layer in which tubular cells are arranged in a plurality of lines, which is made of a resin-containing material, and which has a depressed portion on one surface of the core layer;
a reinforcing member which is positioned inside the depressed portion of the core layer; and
a retaining member which is positioned in contact with both the one surface of the core layer and at least one part of an exposed portion of the reinforcing member, the exposed portion being exposed from the depressed portion,
wherein the core layer is welded to the reinforcing member on a bottom surface of the depressed portion, and the retaining member is bonded to the at least one part of the exposed portion of the reinforcing member.

2. The hollow structure according to claim 1, wherein the core layer is welded to the reinforcing member at a side wall portion of the depressed portion.

3. The hollow structure according to claim 1 or 2, wherein the one surface of the core layer and the exposed portion of the reinforcing member, the exposed portion being exposed from the depressed portion, are on a same plane.

4. The hollow structure according to claim 1 or 2, wherein the reinforcing member is an H-shaped member, an L-shaped member, a bar member, a triangular member, a circular member, or a semicircular member.

5. The hollow structure according to claim 1 or 2, wherein the retaining member is a film.

6. The hollow structure according to claim 1 or 2, wherein the retaining member is an additional core layer in which tubular cells are arranged in a plurality of lines.

7. The hollow structure according to claim 1 or 2, wherein the cells of the core layer are adjacent to each other and form lines, wherein each of the cells of the core layer has a closed surface at one end thereof and has an open end at another end thereof, and wherein the lines of cells of which the open ends are arranged to face the one surface of the core layer and the lines of cells of which the open ends area arranged to face the another surface of the core layer are arranged in every other line.

8. The hollow structure according to claim 1 or 2, further comprising an attachment member joined to the reinforcing member via the retaining member.
